# EUROPEAN PATENT APPLICATION

(11) **EP 1 519 525 A1**
(43) Date of publication of application: **30.03.2005**
(21) Application number: 04396064.0
(22) Date of filing: 20.09.2004
(51) Int. Cl.: H04L 12/56

(54) **Dynamic SVC-connections for AAL2-traffic transport**

(30) Priority: 29.09.2003 FI 20031401
(71) Applicant: Nokia Corporation, 02150 Espoo (FI)
(72) Inventor: Pajunpää, Jussi, 90560 Oulu (FI)
(74) Representative: Simmelvuo, Markku Kalevi

(57) **Abstract**

The present invention concerns a method and a system for dynamically using SVC connections for AAL2 traffic transport in a mobile telecommunications network. A first control threshold and a second control threshold are determined. Routes comprising AAL2 paths are created. SVC connections are assigned to be used as the AAL2 paths. The amount of traffic on a given route is measured at given intervals. One or more new SVC-connections are created to be used as AAL2 paths, if the measured amount of traffic exceeds the first control threshold. Correspondingly, one or more existing SVC-connections used as AAL2 paths are released, if the measured amount of traffic falls below the second control threshold.

## Description

### BACKGROUND OF THE INVENTION:

### Field of the Invention:

The present invention relates to telecommunications. In particular, the present invention relates to a novel and improved method and system for dynamically using SVC connections for AAL2 traffic transport in a mobile telecommunications network.

### Description of the Related Art:

ATM (Asynchronous Transfer Mode) is a fast packet oriented transfer mode based on asynchronous time division multiplexing using fixed length cells. It is widely deployed as a backbone technology. This standards-based transport medium is widely used within the core, at the access and in the edge of telecommunications systems to send data, video and voice at extremely high speeds. ATM Adaptation Layers (AAL) are used to support various services and provide service specific functions. For example, ATM Adaptation Layer Type 2 (AAL2) supports Variable Bit Rate (VBR) timing-sensitive services. AAL2 handles traffic where a strong timing relation between the source and the destination is required, but the bit rate may vary, such as variable bit rate voice and compressed video.

As is known in the art, an ATM based network comprises Virtual Paths (VP) which in turn comprise Virtual Channels (VC). Virtual Channel Identifiers (VCI) and Virtual Path Identifiers (VPI) are used in ATM cell headers to identify the Virtual Paths and Virtual Channels over which the cell is to be routed. A connection between two communicating ATM end-entities is referred to as a virtual circuit or Virtual Channel Connection (VCC). A virtual circuit may consist of a concatenation of several Virtual Channel Links. The term Virtual Channel Link refers to a means of unidirectional transport of ATM cells between the point where a VCI value is assigned and the point where that value is translated or removed.

Virtual circuits can be set up permanently or on demand. The term Permanent Virtual Circuit (PVC) refers to a virtual circuit with static route defined in advance, usually by manual setup. Typically a PVC is administratively defined, specifying the complete path across the network, which can be an arduous process in large networks. The term Switched Virtual Circuit (SVC) refers to a virtual circuit established on demand via signaling. The term Soft Permanent Virtual Circuit (SPVC) refers to a PVC type virtual circuit where SVC's services are used for virtual circuits establishment and routing within the network.

Mobile telecommunications networks, particularly their core networks, are a typical example of deployment of ATM. For example core networks of 3GPP (Third Generation Partnership Project) system based digital mobile telecommunication networks widely deploy ATM.

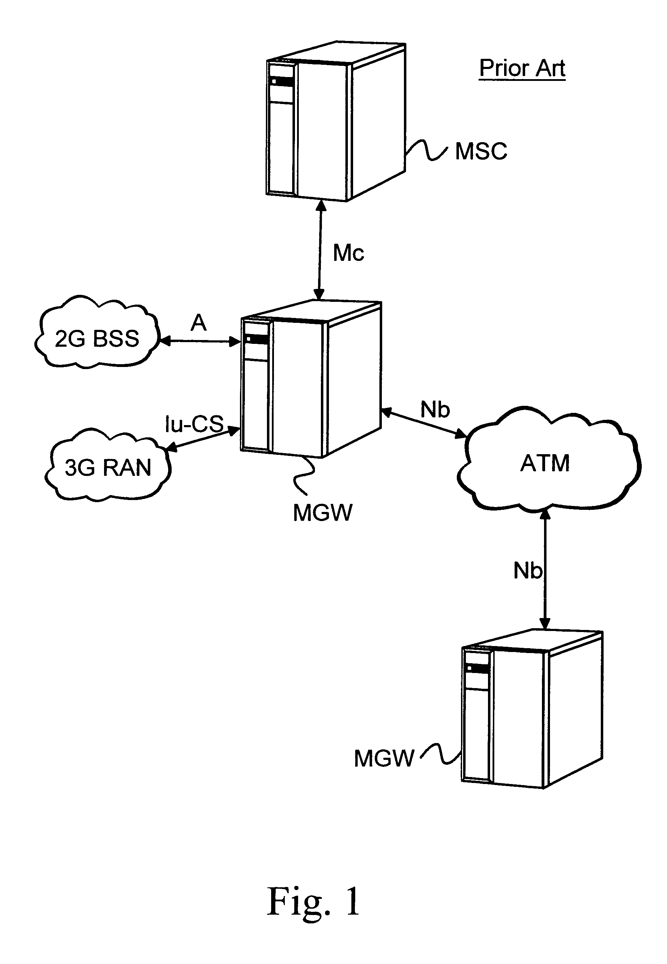

Figure 1 illustrates a part of a conventional 3GPP system circuit switched core network. The core network comprises Mobile Switching Centers (MSC) and Media Gateways (MGW) communicating via Mc interface. Media Gateway is a prior art term referring to a network element containing bearer terminations and media manipulation equipment, e.g. transcoders, echo cancellers, or tone senders. A Media Gateway may perform media conversion and framing protocol conversion. Media Gateways may also communicate with Base Station Systems of a 2^{nd} generation mobile telecommunications network (2G BSS) via A interface. Media Gateways may further communicate with Radio Access Networks of a 3rd generation mobile telecommunications network (3G RAN) via Iu-CS interface. Media Gateways may further communicate with other Media Gateways via Nb interface.

As Figure 1 illustrates, ATM is typically deployed between Media Gateways. AAL2 is typically used as a user plane protocol between Media Gateways. 3GPP specifications specify that PVCs, SVCs or SPVCs may be used with AAL2 between Media Gateways.

When using PVCs with AAL2, the PVCs have to be made with Operations & Maintenance (O&M) procedures. A mesh network of PVCs needs to be planned, created and maintained between all the MGWs involved. The amount of connections needed in a full mesh network grows exponentially compared to the amount of network elements involved since for n elements the amount of connections is n*(N-1)/2. For example, in a network of 10 MGWs at least 45 PVC connections need to be dimensioned and maintained, which yet only allows a maximum of 248 simultaneous AAL2 connections between two MGWs. Further, when traffic environment changes, changing a PVC network requires network planning and O&M actions. The PVCs have to be dimensioned based on the worst-case scenario, thus idle network resources have to be reserved.

Thus alternate solutions to a large number of PVCs are highly desirable. Known prior art solutions include dividing core network to subnetworks. This, however, rejects the benefits of a flat network structure typical of a 3GPP network over a 2G network.

Another prior art solution is automating PVC setup in the ATM backbone network by network management systems. However, the network still does not adjust to the real life traffic situation at MGWs.

Another prior art solution is using AAL2 switching in the ATM backbone. However, this is not feasible with current technology.

Another prior art solution is using AAL1 SVCs instead of AAL2 PVCs. However, AAL1 does not support connections with variable capacity needs. Further, AAL1 is not included in 3GPP Nb specifications, thus using it would result in highly non-standards based implementations.

Another prior art solution is using SVCs with AAL2 instead of PVCs. This would appear to be an ideal solution, yet there are significant problems with how to implement it in practice. 3GPP specifications do not specify how an SVC is used with AAL2. An SVC is basically an on-demand connection that is set up when a connection is needed and released when it is not needed anymore. AAL level connections using AAL2 protocol, or AAL2 connections, are set up and released on demand inside a VC level connection. Several AAL2 connections may exist inside a VC level connection, thus creating an SVC connection for each AAL2 connection wastes resources. The term SVC connection refers to a VC level connection using SVC.

WO 00/62494 discloses a method and apparatus for mapping narrowband DS0 circuits into AAL2 type switched virtual circuits. A narrowband DS0 circuit ID and a called party address of a narrowband call SETUP request received by an ATM switch are used by the switch to identify a virtual channel profile (VCPRO) and a broadband address (BBA). The VCPRO and BBA are then compared to the VCPROs and BBAs of all existing calls which are carried by SVCs and serviced by the switch in order to determine whether or not a suitable existing SVC is presently set up which can carry the call to the termination endpoint of the call. If such an SVC exists, a connection admission control (CAC) is run on the SVC of that call in order to determine whether sufficient bandwidth to carry the requested call is available on that SVC. If sufficient bandwidth is available, the call is accepted, placed into the SVC, and the details of the call, are entered into the active call structure table. If sufficient bandwidth is not available, or if no suitable existing SVC is available, a new SVC is set up between the switch and the destination switch, or the call is rejected.

There are, however, several significant disadvantages to the approach disclosed by WO 00/62494. First, WO 00/62494 concentrates only on fixed network environment disregarding the requirements of mobile telecommunications networks completely. Further, WO 00/62494 defines SVC connection establishment only on immediate resource request from the narrowband (ISDN) side. Further, a numbering plan database is required for routing a call. Thus the approach by WO 00/62494 mixes call control plane and bearer control plane functionality of a 3GPP circuit switched network architecture. Further, the approach by WO 00/62494 provides no means to release the SVCs once set up, thus significantly limiting its usability.

Thus there is an obvious need for a more sophisticated approach for using SVCs with AAL2 which provides a network operator with means to control the functionality of using AAL2 with SVCs in a manageable and efficient way, particularly on the Nb interface. More particularly, there is an need for a solution for creating and releasing SVCs for AAL2 traffic transport dynamically and automatically based on traffic situation.

### SUMMARY OF THE INVENTION:

The present invention concerns a method and a system for dynamically using SVC connections for AAL2 traffic transport in a mobile telecommunications network.

A first control threshold and a second control threshold are determined. Routes comprising AAL2 paths are created. SVC connections are assigned to be used as the AAL2 paths. The term route is used to refer to a logical set of resources with the same traffic parameters used in the SVC establishment, and the same destination. The resources include Virtual Path Link termination points and AAL2 signaling resources. AAL2 path refers to an AAL2 level Virtual Path. An AAL2 path comprises AAL2 level Virtual Channels or AAL2 channels. The AAL2 path functions as a VC level connection.

According to the invention the amount of traffic on a given route is measured at given intervals.

Further according to the invention one or more new SVC-connections are created to be used as AAL2 paths, if the measured amount of traffic exceeds the first control threshold.

Further according to the invention one or more existing SVC-connections used as AAL2 paths are released, if the measured amount of traffic falls below the second control threshold.

In an embodiment of the invention measuring the amount of traffic comprises determining used and available resources on the paths of the route, based on which average used and available resources for the whole route are determined.

In an embodiment of the invention information provided by AAL2 Connection Admission Control is used for measuring the amount of traffic. Connection Admission Control refers to an ATM control function which determines whether a Virtual Channel Connection request should be accepted or rejected. The decision is based on the Quality of Service required, the network resources available and the availability of the connection over the network.

In an embodiment of the invention the new SVC-connections are created and released with ATM UNI 4.0 signaling.

In an embodiment of the invention the mobile telecommunications network is a 3GPP system based digital mobile telecommunication network.

In an embodiment of the invention the mobile telecommunications network comprises Media Gateways connected to each other via Nb-interfaces, the routes created between said Media Gateways.

The present invention allows for creating and releasing SVCs for AAL2 traffic transport dynamically and automatically based on traffic situation. It thus provides a network operator with means to control the functionality of using AAL2 with SVCs in a manageable and efficient way, particularly on the Nb interface.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
Fig 1 illustrates a part of a conventional 3GPP system circuit switched core network,
Fig 2 is a flow chart illustrating a method for dynamically using SVC connections for AAL2 traffic transport in a mobile telecommunications network according to one embodiment of the present invention, and
Fig 3 is a block diagram illustrating a system for dynamically using SVC connections for AAL2 traffic transport in a mobile telecommunications network according to one embodiment of the present invention.

### DETAILED DESCRIPTION OF THE PREFERRED EMBODIMENT(S):

Reference will now be made in detail to the embodiments of the present invention, examples of which are illustrated in the accompanying drawings.

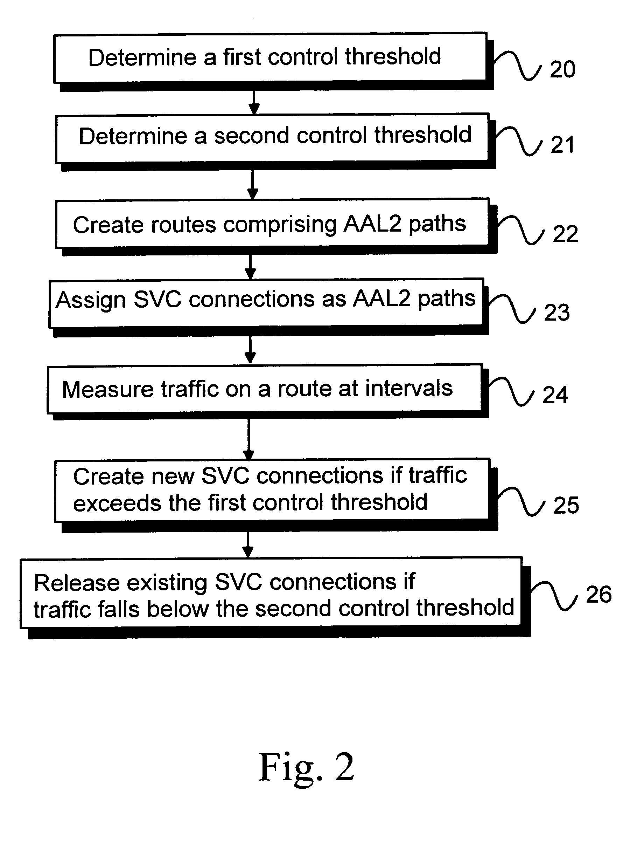

Figure 2 illustrates a method for dynamically using SVC connections for AAL2 traffic transport in a mobile telecommunications network. A first control threshold determined, phase 20. The first control threshold may define e.g. a percentage of traffic on a route when new SVC connections are needed. A second control threshold is determined, phase 21. The second control threshold may define e.g. a percentage of traffic on a route when existing SVC connections should be released. Further, minimum and maximum amount of SVC connections on a route may be defined. Further, traffic parameters used in the SVC establishment may be determined. Further, resources dedicated for use including Virtual Path Link termination points and AAL2 signaling resources may be determined. Routes comprising AAL2 paths are created, phase 22. SVC connections are assigned to be used as the AAL2 paths, phase 23. he amount of traffic on a given route is measured at given intervals, phase 24. In a preferred embodiment of the invention measuring the amount of traffic comprises determining used and available resources on the paths of the route, based on which average used and available resources for the whole route are determined. Preferably information provided by AAL2 Connection Admission Control is used for measuring the amount of traffic.

If the measured amount of traffic exceeds the first control threshold, one or more new SVC-connections are created to be used as AAL2 paths, preferably with ATM UNI 4.0 signaling, phase 25. A connections identifier (AAL2 path ID) may be included in the signaling messages to allow for identification of the SVC connection from AAL2 signaling procedures, as in known in the art. On the other hand, if the measured amount of traffic falls below the second control threshold, one or more existing SVC-connections in use as AAL2 paths are released, preferably with ATM UNI 4.0 signaling, phase 26. In an embodiment, to release an SVC connection used as an AAL2 path the AAL2 path is first blocked with AAL2 signaling procedures to prevent new AAL2 connection establishments on the path. Before the release of the SVC connection the ongoing AAL2 connections on the path are waited to be released by AAL2 signaling. When there are no more AAL2 connections on the route, the SVC connection is released with UNI 4.0 signaling procedures.

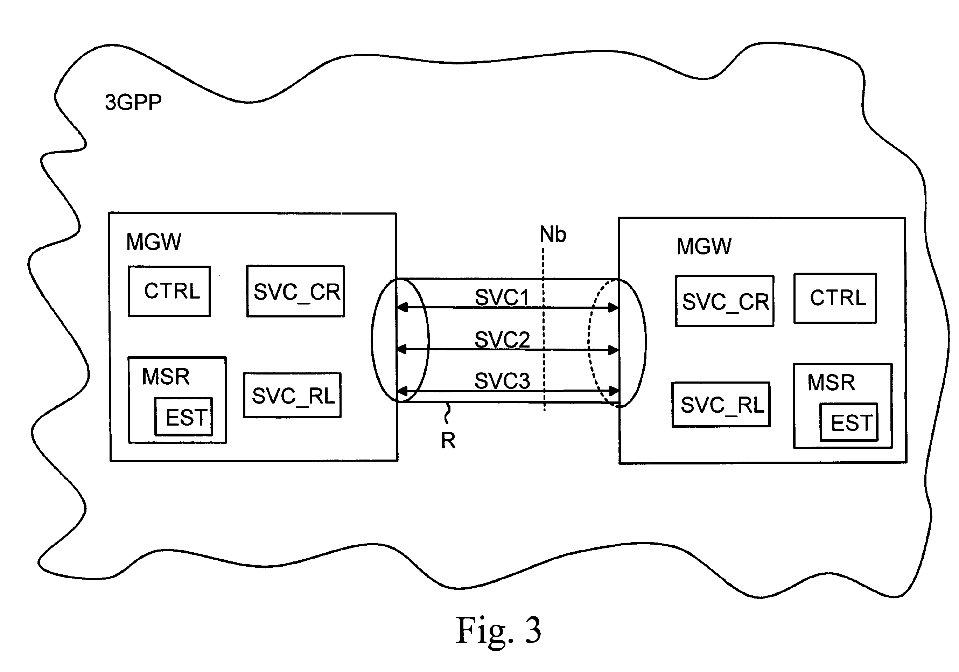

Figure 3 illustrates a system for dynamically using SVC connections for AAL2 traffic transport in a mobile telecommunications network according to one embodiment of the present invention. In the embodiment of the present invention illustrated in Figure 3 the mobile telecommunications network is a 3GPP system based digital mobile telecommunication network comprising Media Gateways MGW communicating with each other via Nb-interfaces.

The system comprises control means CTRL for determining a first control threshold and a second control threshold. The system further comprises routes R comprising AAL2 paths (only one route is illustrated in Figure 3 for the sake of clarity). In the embodiment of the present invention illustrated in Figure 3 the routes are between the Media Gateways. The system further comprises SVC connections SVC1, SVC2, SVC3 assigned to be used as said AAL2 paths. Typically an MGW is controlled by resource requests received through H.248 interface. For an AAL2 resource request a route is selected based on the destination of the resource, an AAL2 path is selected from the route, and an AAL2 channel is allocated from the AAL2 path for the connection. In this context the AAL2 path is a VC level connection.

The system further comprises traffic measurement means MSR for measuring the amount of traffic on a given route at given intervals. In the embodiment of the present invention illustrated in Figure 3 the traffic measurement means further comprises resource estimation means EST for determining used and available resources on the paths of the route, based on which average used and available resources for the route are determined. In the embodiment of the present invention illustrated in Figure 3 the traffic measurement means utilize information provided by AAL2 Connection Admission Control.

The system further comprises SVC creating means SVC_CR for creating one or more new SVC-connections to be used as AAL2 paths if the measured amount of traffic exceeds the first control threshold. The system further comprises SVC releasing means SVC_RL for releasing one or more existing SVC-connections used as AAL2 paths if the measured amount of traffic falls below the second control threshold. In the embodiment of the present invention illustrated in Figure 3 the SVC creating means and the SVC releasing means utilize ATM UNI 4.0 signaling for creating the new SVC-connections.

It should be noted that although Figure 3 depicts the control means, the traffic measurement means, the resource estimation means, the SVC creating means and the SVC releasing means implemented in an MGW, this is not required for the purposes of the present invention. Rather, the control means, the traffic measurement means, the resource estimation means, the SVC creating means and the SVC releasing means may be implemented in a variety of ways obvious to a man skilled in the art. Further, the control means, the traffic measurement means, the resource estimation means, the SVC creating means and the SVC releasing means may be implemented in software, in hardware, or in a combination thereof.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for dynamically using Switched Virtual Circuit (SVC) connections for Asynchronous Transfer Mode (ATM) Adaptation Layer Type 2 (AAL2) traffic transport in a mobile telecommunications network, wherein the method comprises the steps of:
determining a first control threshold,
determining a second control threshold,
creating routes comprising AAL2 paths,
assigning SVC-connections to be used as said AAL2 paths,
measuring an amount of traffic on a given route at given intervals,
creating at least one new SVC-connection to be used as a new AAL2 path, when the measured amount of traffic exceeds the first control threshold, and
releasing at least one assigned SVC-connection, when the measured amount of traffic falls below the second control threshold.

2. The method according to claim 1, wherein the step of measuring the amount of traffic comprises determining used and available resources on the AAL2 paths of said given route, based on which, average used and available resources for the route are determined, said resources including Virtual Path Link termination points and AAL2 signaling resources.

3. The method according to claim 1, wherein the step of measuring the amount of traffic comprises using information provided by AAL2 Connection Admission Control for measuring the amount of traffic.

4. The method according to claim 1, wherein the step of creating at least one new SVC-connection comprises creating the new SVC-connections with ATM User-Network Interface (UNI) 4.0 signaling.

5. The method according to claim 1, wherein the step of releasing at least one assigned SVC-connection comprises releasing the assigned SVC-connections with ATM User-Network Interface (UNI) 4.0 signaling.

6. The method according to claim 1, wherein the mobile telecommunications network is a Third Generation Partnership Project (3GPP) system.

7. The method according to claim 6, wherein the mobile telecommunications network comprises Media Gateways connected to each other via Nb-interfaces, and the step of creating routes comprises creating said routes between said Media Gateways.

8. A system for dynamically using Switched Virtual Circuit (SVC) connections for Asynchronous Transfer Mode (ATM) Adaptation Layer Type 2 (AAL2) traffic transport in a mobile telecommunications network, wherein the system comprises:
control means for determining a first control threshold and a second control threshold,
routes comprising AAL2 paths,
SVC connections assigned to be used as said AAL2 paths,
traffic measurement means for measuring an amount of traffic on a given route at given intervals,
SVC creating means for creating at least one new SVC-connection, when the measured amount of traffic exceeds the first control threshold, and
SVC releasing means for releasing at least one assigned SVC-connection, when the measured amount of traffic falls below the second control threshold.

9. The system according to claim 8, wherein the traffic measurement means further comprises:
resource estimation means for determining used and available resources on the paths of said given route, based on which, average used and available resources for the route are determined, said resources including Virtual Path Link termination points and AAL2 signaling resources.

10. The system according to claim 8, wherein the traffic measurement means is configured to utilize information provided by AAL2 Connection Admission Control.

11. The system according to claim 8, wherein the SVC creating means is configured to utilize ATM User-Network Interface (UNI) 4.0 signaling for creating the new SVC-connections.

12. The system according to claim 8, wherein the SVC releasing means is configured to utilize ATM User-Network Interface (UNI) 4.0 signaling for releasing the existing SVC-connections.

13. The system according to claim 8, wherein the mobile telecommunications network is a Third Generation Partnership Project (3GPP) system.

14. The system according to claim 13, wherein the mobile telecommunications network comprises Media Gateways connected to each other via Nb-interfaces, said routes are created between said Media Gateways.
